# EUROPEAN PATENT SPECIFICATION

(11) **EP 2 828 549 B1**
(45) Date of publication and mention of the grant of the patent: **09.12.2015**
(21) Application number: 13709483.5
(22) Date of filing: 18.03.2013
(51) Int. Cl.: F16F 15/32, G01M 1/32

(54) **BALANCE WEIGHT FOR VEHICLE WHEELS**
GEGENGEWICHT FÜR FAHRZEUGRÄDER
MASSE D'ÉQUILIBRAGE POUR DES ROUES DE VÉHICULE

(30) Priority: 20.03.2012 EP 12160442; 13.07.2012 EP 12176440; 17.10.2012 EP 12188902
(43) Date of publication of application: 28.01.2015
(73) Proprietor: Wegmann Automotive GmbH & Co. KG, 97209 Veitshöchheim (DE)
(72) Inventor: BÜRGEL, Hans-Ulrich, 97849 Roden (DE); WAGENSCHEIN, Dietmar, 97209 Veitshöchheim (DE)
(74) Representative: Lohr, Georg
(86) International application number: PCT/EP2013/055592
(87) International publication number: WO 2013/139751

(56) References cited:
- EP-B1- 1 613 876
- DE-U1- 7 920 660
- FR-A- 1 382 299
- GB-A- 1 052 217
- JP-A- 55 119 247
- US-A- 4 554 734
- US-B1- 6 364 421

## Description

### Field of the invention

The invention relates to a balancing weight, an assembly of a plurality of such balancing weights and a process for feeding balancing weights to a balancing machine, all for use in association with the balancing of vehicle wheels.

### Description of the related art

The balancing of vehicle wheels is a well-known technique. Two kinds of balancing weights are in use. The first kind of balancing weights is fixed by a clamp, as disclosed in European patent EP 1 613 876 B1, while the second kind is fixed by means of a self-adhesive tape, as disclosed in US patent 6,364,421 B1.

Both kinds of balancing weights are commercially available in a plurality of sizes and shapes. When balancing a vehicle wheel, the proper balancing weight is selected and attached to the rim at the proper position, determined by a balancing machine, which may perform the complete balancing process.

Mostly, the balancing weights are supplied as bulk material in different sizes in boxes. The proper balancing weight is selected either by hand or in an automatic process by the balancing machine. Selecting the balancing weight by hand is prone to errors. Feeding an automatic balancing machine with bulk balancing weights requires an operator putting the correct size of the balancing weights in orderly fashion into the magazine of the balancing machine.

An assembly of balancing weights, where individual weights are stacked and held by means of connecting means, according to the prior art, is known from document GB 1,052,217 A.

### Summary of the invention

The problem to be solved by the invention is to improve the foresaid handling of balancing weights.

Solutions of the problem are described in the independent claims. The dependent claims relate to improvements and preferred embodiments of the invention.

According to a first aspect of the invention a balancing weight having a first face adapted to be fitted onto an inner peripheral surface of the rim and a second face opposing the first face, comprises at least one guideway for a connecting means for stacking a plurality of such balancing weights. Preferably, the guideway connects or forms a channel between the first face and the second face.

A plurality of the balancing weights are arranged in the same or identical orientation to form a stack and held together by the connecting means. Preferably, a first face of a first balancing weight is close to a second face of a second balancing weight.

Preferably, the connecting means is a cord. The term "cord" is to be understood in a broad sense, comprising into alia a braid, wire or band of suitable material like metal, natural or synthetic fibers. However, if the balancing weights have a single channel (e.g. a through-hole) with polygonal cross-section and therefore requiring a connecting means with a complementary cross-section in order to maintain alignment of the balancing weights in the stack, the connecting means preferably consists of a synthetic resin. Hence, a plurality of such balancing weights can easily be stacked, either manually or by a packing machine to form packs.

Preferably, the guideway is a traverse channel running from the first to the second face of the balancing weight. The term "channel" is to be understood in a broad sense, including but not limited to a hole or a notch, having a circular or non-circular cross-section. For instance, the balancing weight may have an open notch in its narrow side and preferably a further notch in its opposite narrow side for receiving the connecting means, made from a material and with a cross-section such that it secures a plurality of such balancing weights to form a sufficiently stable stack.

Specifically, if the balancing weight has a single channel, such channel preferably has a polygonal cross-section for receiving the connecting means, the latter having a complementary cross-section, such that the balancing weights are kept together in the stack in an oriented manner.

In addition or alternatively, the first and the second face may have complementary profiles for aligning subsequent balancing weights in the stack. For example, the first face of the balancing weight may have one or more indentations and the second face may have one or more complementary projections.

In a preferred embodiment, the balancing weight has at least two spaced apart channels.

The channel, respectively each channel can simply be a through-hole. Such hole may be formed in a moulding process of the balancing weight. Alternatively, the through-hole may be punched or drilled.

The balancing weight may form a stable stack, if each balancing weight has at least two through-holes, provided lengthwise an axis of symmetry of the balancing weight, which usually has an elongated contour or shape.

In a preferred embodiment, the balancing weight has at least one notch, running perpendicular to a lengthwise axis of the balancing weight. The cross section and the depth of the notch (or each notch) depend on its purpose: The notch or notches may either serve to ease the bending of the balancing weight in one or two axis in order to better conform to the curvature of the rim. Alternatively or additionally, the notch (or notches) may define a predetermined breaking line, permitting to sever one or both its end-sections from the remainder of the balancing weight in case a balancing weight of lesser mass than that of the original balancing weight is required.

The invention is not limited to a certain type of material or construction of a balancing weight. In a preferred embodiment, it consists of metal, usually zinc, having a mono-layer or multi-layer coating, comprising a self-adhesive face, which will then constitute the first face that is to say the face for fitting the balancing weight onto the rim, the self-adhesive face being protected by a tear-off liner.

In a preferred embodiment of the assembly of balancing weights having two spaced apart channels, the connecting means runs from last or uppermost balancing weight through the respective first channels of all balancing weights to the lowermost or first balancing weight and back in the opposite direction to the respective second channels. This simplifies the building of the stack.

In a further embodiment of the assembly the connecting means has a first end-section and a second end-section, both protruding at the same side of the stack and being sealed together close to the last or uppermost balancing weight. This simplifies the handling, specifically the storage and the transport of the stacks or packs.

According to another embodiment, the seal and/or the connecting cord may be colour encoded. Different colours may represent different weights. The storage bin of a pick and place machine or dispenser for balancing weights may have the same colour encoding to simplify allocation. Furthermore, there may be an information tag or banner attached to the connecting cord and/or seal. It may bear information about the weight of the balancing weights and/or may be colour encoded as described above.

In a further aspect, the invention proposes a process for feeding balancing weights to a balancing machine, preferably an automatic balancing machine, wherein the balancing weights being configured to forms stacks, and the balancing machine being configured to receive these stacks. This process contributes to a further automation of the balancing of vehicle wheels.

### Description of Drawings

In the following, the invention will be described by way of example, without limitation of the general inventive concept, on examples of embodiment with reference to the drawings.
Figure 1 is a perspective view of a stack comprising a plurality of balancing weights connected by a cord or wire.
Figure 2 is a perspective view of a preferred balancing weight and a segment of the cord or wire for connecting a plurality of balancing weights.
Figure 3 is a perspective view of another balancing weight and a segment of the cord or wire for connecting a plurality of balancing weights.
Figure 4 is a perspective view of another balancing weight and a segment of the cord or wire for connecting a plurality of balancing weights.
Figure 5 is a perspective view of another balancing weight and a segment of the cord or wire for connecting a plurality of balancing weights.
Figure 6 is a perspective view of another balancing weight and a segment of the cord or wire for connecting a plurality of balancing weights.
Figure 7 is a perspective view of another balancing weight and a segment of the cord or wire for connecting a plurality of balancing weights.
Figure 8 is a perspective view of a stack comprising a plurality of clip-on balancing weights connected by a cord or wire.
Figure 9 is a perspective view of a single clip-on balancing weight.
Figure 10 is a perspective view of a stack comprising a plurality of clip-on balancing weights with integrated clips connected by a cord or wire.
Figure 11 is a perspective view of a single clip-on balancing weight with integrated clip.

Generally, the illustrated balancing weights are in the shape of elongated parallelepipeds of metal or artificial resin. However, the invention is not limited to balancing weights of parallelepiped form but applies to other shapes, too, no matter whether they are designed for fixing by a clip or by means of a self-adhesive tape.

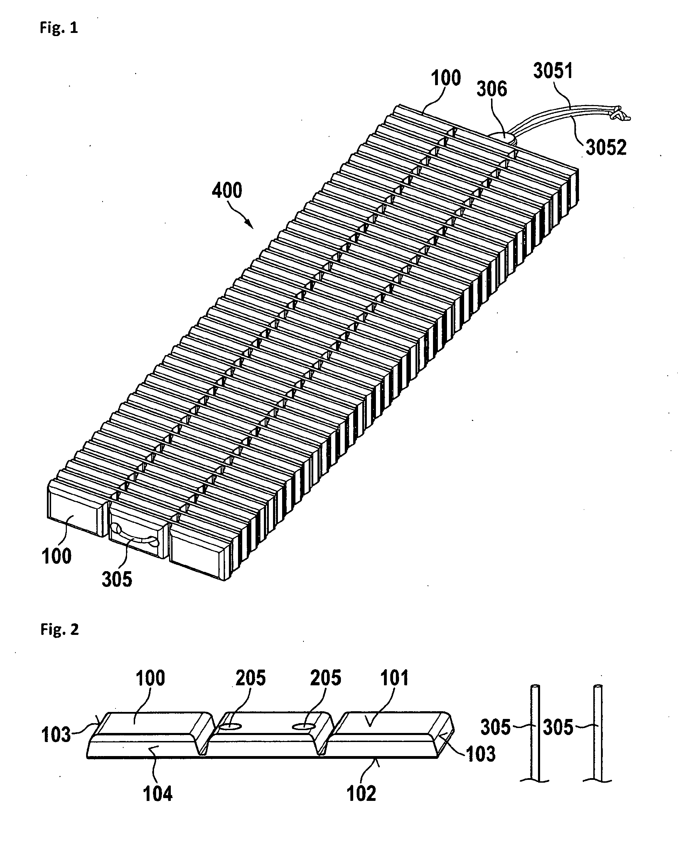

Figure 1 illustrates a stack 400 comprising a large number of balancing weights 100, held together by a double ended connecting cord 305, running through respective spaced apart through-holes in the balancing weights. The connecting cord 305 has a first end-section 3051 and a second end-section 3052, protruding from the last balancing weight. Close to the last balancing weight, the two end-sections are held together by a seal 306, such that the stack 400 has sufficient stability, specifically for storage and/or handling by a conveyor, which may feed the stack to a magazine of a balancing machine (not shown). The seal and/or the connecting cord may be colour encoded. Different colours may represent different weights and or different numbers of weights. The storage bin of a pick and place machine or dispenser for balancing weights may have the same colour encoding to simplify allocation. Furthermore, there may be an information tag or banner attached to the connecting cord and/or seal. It may bear information about the weight and/or number of the balancing weights and/or may be colour encoded as described above.

The balancing weight 100 in figure 2 and those in the further figures all have a first face 102 for fitting the balancing weight onto an inner peripheral surface of the rim of a vehicle wheel (not shown), and opposite the first face 102 a second face 101. Further, the balancing weight has two opposing short narrow sides 103 und two opposing long narrow sides 104.

Preferably, the balancing weight has two spaced apart guideways in the form of cylindrical through-holes 205 for receiving a connecting cord or rod 305. The balancing weight shown herein has three segments, which are separated by notches, or grooves, which simplify bending and adapting of the balancing weight to the radius of the rim. This embodiment is not limited to three segments as shown herein. It may have any number of segments including one. All other embodiments of balancing weights shown herein may also comprise segments.

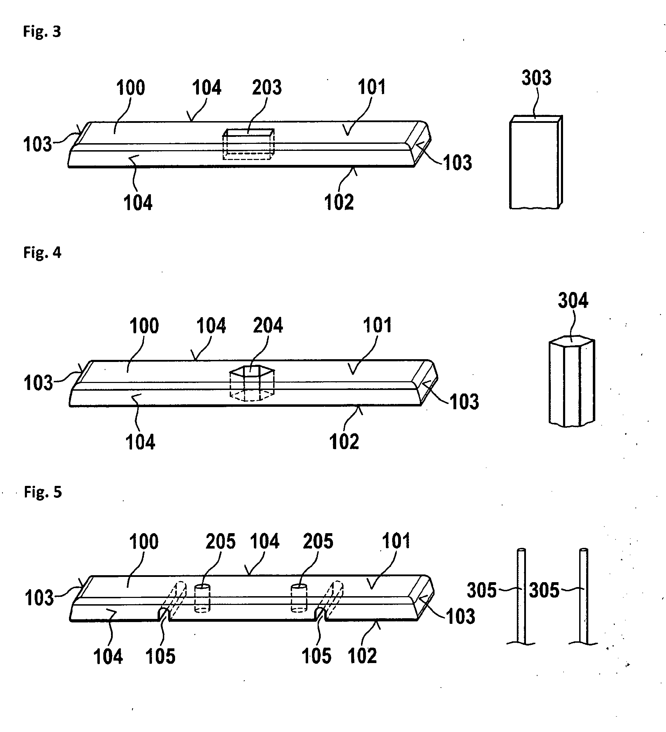

In figure 3, the balancing weight has a single guideway in the form of an oblong through-hole 203, designed for receiving a connecting band 303, which may be much thinner than the width of the oblong through-hole 203. Generally, in the case of a single guideway, the connecting cord has a first end at a first side of the stack and a second end at the second side of the stack. There may be a terminator at at least one end of the cord to prevent the cord from slipping through the holes. Such a terminator may be a knot or a plastic or metal part, which has a size larger than the size or diameter of the holes. There may also be a terminator on the first side and a seal at the second side, or seals at both sides.

In figure 4, the balancing weight has a guideway in the form of a hexagonal through-hole 204 for receiving a connecting wire or rod 304 with corresponding hexagonal cross-section.

In figure 5, the balancing weight has two spaced apart guideways in the form of cylindrical through-holes 205, each for receiving a connecting cord 305. The cord 305 may consist of a flexible material. Alternatively, it may be a solid or braided metal wire. In this embodiment the balancing weight also has two spaced apart notches 105 in the lower or first face, the notches 105 running perpendicular to a lengthwise axis of the balancing weight and enabling easy bending of the balancing weight in order to better conform to the contour of the rim, alternatively for defining a predetermine break line, for severing one or both its end-sections form the center part of the balancing weight.

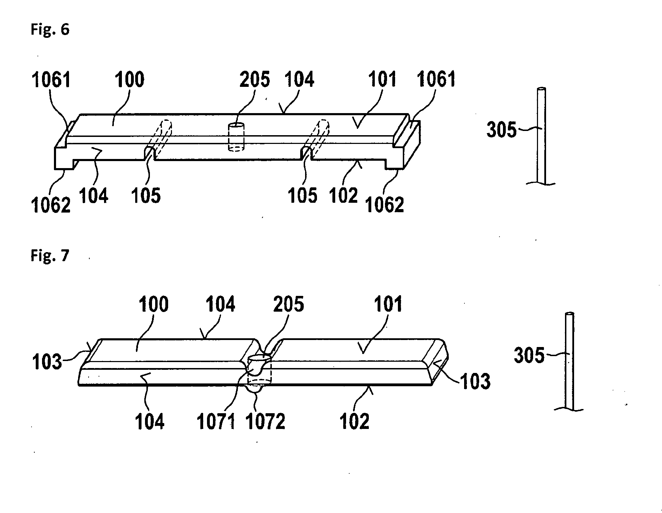

Whereas in the embodiments in figures 1 to 5 the cross-section of the guideway in cooperation with the cross-section of the respective connecting means warrants the proper alignment of the balancing weights in the stack, figures 6 and 7 illustrate embodiments warranting the alignment of the balancing weight in the stack by the shape of the balancing weight its self, i.e. by providing its first and its second face with mating indentations and protrusions, respectively.

In figure 6, the balancing weight has a single central cylindrical through-hole 205 for a connecting cord 305 and opposing stepped short upper edges 1061 and opposing complementary protruding short lower edges 1062, such that the stepped short upper edges 1061 will receive the protruding short lower edges 1062 of the adjacent above balancing weight (not shown). The balancing weight has the same type of traverse notches 105 as shown in figure 6.

In figure 7, the balancing weight also has a single central through-hole 205 for a connecting cord 305. Proper alignment of adjacent balancing weights is warranted by a traverse groove 1071 in the first face and a complementary traverse bulge 1072 in the second face.

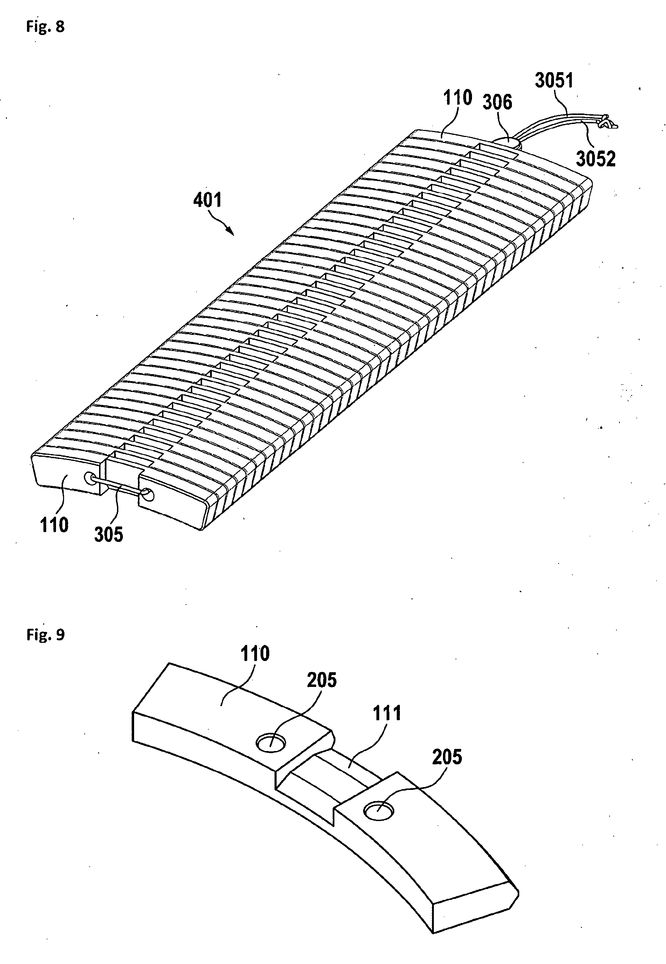

In figure 8, an alternate stack 401 comprising a number of clip-on balancing weights 110, held together by a double ended connecting cord 305, is shown. This is similar to figure 1, except for the different balancing weights.

In figure 9, a clip-on balancing weight 110, as used in the stack in the previous figure is shown, having through holes 205. There may be a clip attachment surface 111 to which a clip (not shown) for holding the balancing weight to a wheel may interface.

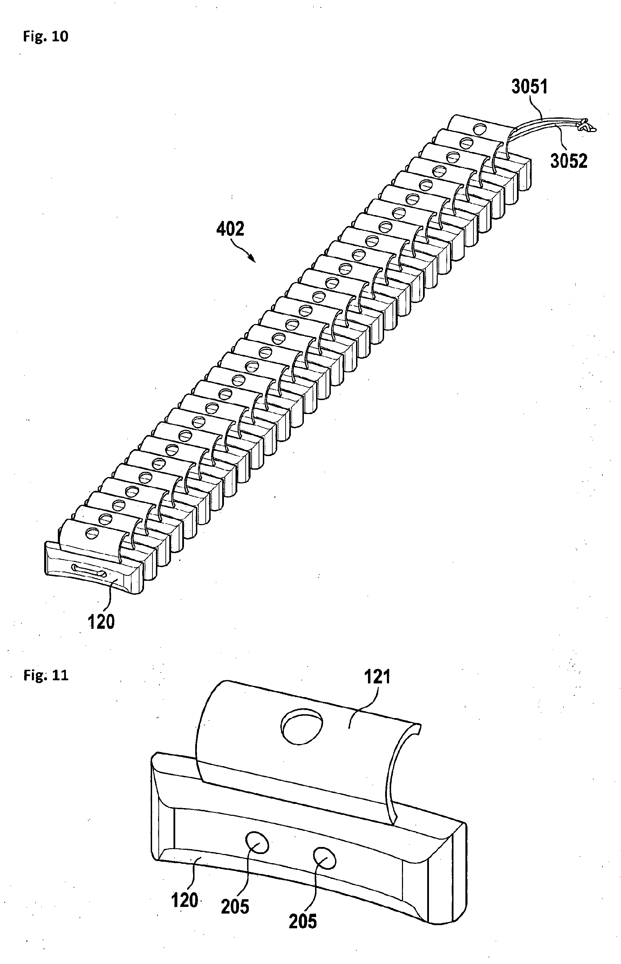

In figure 10, a further stack 402 comprising a number of clip-on balancing weights with integrated clip 120, held together by a double ended connecting cord 305, is shown. This is similar to figure 1, except for the different balancing weights.

In figure 11, a clip-on balancing weight 120 with a clip 121, as used in the stack in the previous figure is shown, having through holes 205.

### List of reference numerals

- 100: balancing weight
- 101: second face
- 102: first face
- 103: short narrow side
- 104: long narrow side
- 105: notch
- 110: clip-on balancing weight
- 111: clip attachment surface
- 120: balancing weight with clip
- 121: clip

- 1061: stepped short upper edge
- 1062: protruding short lower edge
- 1071: groove
- 1072: bulge

- 203: oblong through-hole
- 204: hexagonal through-hole
- 205: cylindrical through-hole

- 303: connecting band
- 304: connecting rod with hexagonal cross-section
- 305: connecting cord
- 3051: first end-section
- 3052: second end-section
- 306: seal

- 400: stack
- 401: alternate stack
- 402: further stack

## Claims

1. Assembly comprising a plurality of balancing weights for vehicle wheels, the balancing weights (100) having a first face (102) for fitting the balancing weight onto an inner peripheral surface of the rim of the wheels and a second face (101), opposing the first face,
the balancing weights (100) comprise at least one guideway (203, 204, 205) between the first face (102) and the second face (101) for guiding a connecting means (303, 304, 305) for stacking a plurality of the balancing weights, and
the balancing weights (100) are arranged in the same orientation and held together by the connecting means (303, 304, 305) to form a stack (400) **characterized in, that**
the connecting means (303, 304, 305) is a cord or wire.

2. Assembly according to claim 1,
**characterized in, that**
the balancing weights have two spaced apart channels (205), wherein the connecting means (305) runs from the last or uppermost balancing weight through the respective first channels of all balancing weights to the lowermost or first balancing weight and back in the opposite direction through the respective second channels.

3. Assembly according to any of the claims 1 or 2,
**characterized in, that**
the connecting means (305) has a first end-section (3051) and a second end-section (3052), both protruding at the same side of the stack (400) and being sealed together close to the last or uppermost balancing weight.

4. Assembly according to any of the claims 1 to 3,
**characterized in, that**
the connecting means and/or a seal are colour encoded, wherein each colour represents a specific weight of the balancing weights.

5. Assembly comprising a plurality of balancing weights for vehicle wheels, the balancing weights (100) having a first face (102) for fitting the balancing weight onto an inner peripheral surface of the rim of the wheels a nd a second face (101), opposing the first face,
the balancing weights (100) comprise at least one guideway (203, 204, 205) between the first face (102) and the second face (101) for guiding a connecting means (303, 304, 305) for stacking a plurality of the balancing weight,
the balancing weights (100) are arranged in identical orientation and held together by the connecting means (303, 304, 305) to form a stack (400), the balancing weights have two spaced apart channels (205), **characterized in, that**
the connecting means (303, 304, 305) has a first end-section (3051) and a second end-section (3052), both protruding at the same side of the stack (400) and being sealed together close to the last or uppermost balancing we ight.

6. Assembly according to claim 5,
**characterized in, that**
the connecting means (303, 304, 305) is a cord or wire.

7. Assembly according to claim 5 or 6,
**characterized in, that**
the connecting means and/or a seal are colour encoded, wherein each colour represents a specific weight of the balancing weights.

8. Process for feeding balancing weights (100) to a balancing machine,
wherein the balancing weights being configured to form stacks (400) according to any one of the previous claims, and the balancing machine being configured to receive said stacks (400).

## Patentansprüche

1. Anordnung, umfassend eine Vielzahl von Auswuchtgewichten für Fahrzeugräder,
wobei die Auswuchtgewichte (100) eine erste Fläche (102) haben, um das Auswuchtgewicht an einer inneren Umfangsfläche der Felge der Räder einzupassen, und eine zweite, der ersten Fläche gegenüberliegende Fläche (101) haben,
wobei die Auswuchtgewichte zwischen der ersten Fläche (102) und der zweiten Fläche (101) zumindest eine Führungsbahn (203, 204, 205) zur Führung eines Verbindungsmittels (303, 304, 305) zum Stapeln einer Vielzahl der Auswuchtgewichten umfassen, und
die Auswuchtgewichte (100) in gleicher Ausrichtung angeordnet sind und durch die Verbindungsmittel (303, 304, 305) zusammengehalten sind, um einen Stapel (400) zu bilden, **dadurch gekennzeichnet dass**
das Verbindungsmittel (303, 304, 305) eine Schnur oder ein Draht ist.

2. Anordnung nach Anspruch 1,
**dadurch gekennzeichnet, dass**
die Auswuchtgewichte zwei beabstandete Kanäle (205) haben, wobei das Verbindungsmittel (305) vom letzten oder obersten Auswuchtgewicht durch die entsprechenden ersten Kanäle aller Auswuchtgewichte zum untersten oder ersten Auswuchtgewicht, und in der entgegengesetzten Richtung durch die entsprechenden zweiten Kanäle verläuft.

3. Anordnung nach einem der Ansprüche 1 oder 2,
**dadurch gekennzeichnet, dass**
das Verbindungsmittel (305) einen ersten Endabschnitt (3051) und einen zweiten Endabschnitt (3052) hat, die beide auf der gleichen Seite des Stapels (400) hervorstehen und in der Nähe des letzten oder obersten Auswuchtgewichtes miteinander versiegelt sind.

4. Anordnung nach einem der Ansprüche 1 bis 3,
**dadurch gekennzeichnet, dass**
das Verbindungsmittel und oder eine Versiegelung farbcodiert sind, wobei jede Farbe ein spezifisches Gewicht der Auswuchtgewichte darstellt.

5. Anordnung, umfassend eine Vielzahl von Auswuchtgewichten für Fahrzeugräder,
wobei die Auswuchtgewichte (100) eine erste Fläche (102) haben, um das Auswuchtgewicht an einer inneren Umfangsfläche der Felge der Räder einzupassen, und eine zweite, der ersten Fläche gegenüberliegende Fläche (101) haben,
wobei die Auswuchtgewichte zwischen der ersten Fläche (102) und der zweiten Fläche (101) zumindest eine Führungsbahn (203, 204, 205) zur Führung eines Verbindungsmittels (303, 304, 305) zum Stapeln einer Vielzahl der Auswuchtgewichten umfassen,
wobei die die Auswuchtgewichte (100) in gleicher Ausrichtung angeordnet sind und durch die Verbindungsmittel (303, 304, 305) zusammengehalten sind, um einen Stapel (400) zu bilden, wobei die Auswuchtgewicht zwei beabstandete Kanäle (205) haben,
**dadurch gekennzeichnet, dass**
das Verbindungsmittel (303, 304, 305) einen ersten Endabschnitt (3051) und einen zweiten Endabschnitt (3052) hat, die beide auf der gleichen Seite des Stapels (400) hervorstehen und miteinander in der Nähe des letzten bzw. obersten Auswuchtgewicht versiegelt sind.

6. Anordnung gemäß Anspruch 5,
**dadurch gekennzeichnet, dass**
das Verbindungsmittel (303, 304, 305) eine Schnur oder ein Draht ist.

7. Anordnung gemäß Anspruch 5 oder 6,
**dadurch gekennzeichnet, dass**
das Verbindungsmittel und/oder eine Versiegelung farbcodiert sind, wobei jede Farbe ein spezifisches Gewicht der Auswuchtgewichte darstellt.

8. Verfahren zum Zuführen von Auswuchtgewichten (100) zu einer Auswuchtmaschine, wobei die Auswuchtgewichte ausgebildet sind, um Stapel (400) nach einem der vorhergehenden Ansprüche zu bilden, und die Auswuchtmaschine zum Empfangen dieser Stapel (400) konfiguriert ist.

## Revendications

1. Un assemblage comprenant une pluralité de poids d'équilibrage pour des roues de véhicule, les poids d'équilibrage (100) ayant une première face (102) pour ajuster le poids d'équilibrage sur une surface périphérique intérieure du bord des roues et une deuxième face (101), à l'opposé de la première face,
Les poids d'équilibrage (100) comprennent au moins une glissière (203, 204, 205) entre la première face (102) et la deuxième face (101) pour guider un dispositif de connexion (303, 304, 305) pour empiler une pluralité de poids d'équilibrage, et
Les poids d'équilibrage (100) sont disposés dans le même sens et tenus ensemble par le dispositif de connexion (303, 304, 305) pour former une pile (400)
**Caractérisé en ce que**
Le dispositif de connexion (303, 304, 305) est une corde ou un fil.

2. Un assemblage selon la revendication 1,
**Caractérisé en ce que**
Les poids d'équilibrage ont deux canaux séparés (205), où le dispositif de fixation (305) s'étend du dernier poids d'équilibrage ou du poids d'équilibrage le plus élevé au travers des premiers canaux respectifs de tous les poids d'équilibrage jusqu'au premier poids d'équilibrage ou du poids d'équilibrage le moins élevé et revient dans le sens opposé au travers des deuxièmes canaux respectifs.

3. Un assemblage selon l'une des revendications 1 ou 2,
**Caractérisé en ce que**
Le dispositif de connexion (305) possède une première section terminale (3051) et une deuxième section terminale (3052), toutes les deux en saillie du même côté que la pile (400) et étant fixées ensemble proche du dernier poids d'équilibrage ou du poids d'équilibrage le plus élevé.

4. Un assemblage selon l'une des revendications 1 à 3,
**Caractérisé en ce que**
Le dispositif de connexion et/ou un joint ont un code couleur, où chaque couleur représente un poids spécifique des poids d'équilibrage.

5. Un assemblage comprenant une pluralité de poids d'équilibrage pour des roues de véhicule, les poids d'équilibrage (100) ayant une première face (102) pour ajuster les poids d'équilibrage sur une surface périphérique intérieure du bord des roues et une deuxième face (101), à l'opposé de la première face,
Les poids d'équilibrage (100) comprennent au moins une glissière (203, 204, 205) entre la première face (102) et la deuxième face (101) pour guider un dispositif de connexion (303, 304, 305) pour empiler une pluralité de poids d'équilibrage,
Les poids d'équilibrage (100) sont disposés dans le même sens et tenus ensemble par le dispositif de connexion (303, 304, 305) pour former une pile (400),
Les poids d'équilibrage ont deux canaux séparés (205),
**Caractérisés en ce que**
Les dispositifs de connexion (303, 304, 305) ont une première section finale (3051) et une deuxième section finale (3052), toutes les deux en saillie sur le même côté que la pile (400) et étant fixées ensemble à proximité du dernier poids d'équilibrage ou du poids d'équilibrage le plus élevé.

6. Un assemblage selon la revendication 5,
**Caractérisé en ce que**
Le dispositif de connexion (303, 304, 305) est une corde ou un fil.

7. Un assemblage selon l'une des revendications 5 ou 6,
**Caractérisé en ce que**
Le dispositif de connexion et/ou un joint ont un code couleur, où chaque couleur représente un poids spécifique des poids d'équilibrage.

8. Un processus pour alimenter les poids d'équilibrage (100) dans une machine d'équilibrage, Où les poids d'équilibrage étant configurés pour former des piles (400) selon l'une des revendications précédentes, et la machine d'équilibrage étant configurée pour recevoir ces piles (400).
